# EUROPÄISCHE PATENTSCHRIFT

(11) **EP 2 804 034 B1**
(45) Veröffentlichungstag und Bekanntmachung des Hinweises auf die Patenterteilung: **05.01.2022**
(21) Anmeldenummer: 14165648.8
(22) Anmeldetag: 23.04.2014
(51) Int. Cl.: G02B 6/36

(54) **Befestigungseinrichtung für Lichtleiter mit Verstärkung für Nutkaschierung**
Mounting means for optical fibre with reinforcement for groove lamination
Moyen de montage pour un guide d'ondes doté d'un renforcement pour masquer la rainure

(30) Priorität: 14.05.2013 DE 102013208832
(43) Veröffentlichungstag der Anmeldung: 19.11.2014
(73) Patentinhaber: Lisa Dräxlmaier GmbH, 84137 Vilsbiburg (DE)
(72) Erfinder: Bayersdorfer, Bernhard, 84171 Baierbach (DE); Aichner, Rudolf, 84178 Kirchberg (DE)

(56) Entgegenhaltungen:
- DE-U1-202005 003 613
- FR-A1- 2 876 174
- US-A1- 2002 071 285
- None

## Beschreibung

### TECHNISCHES GEBIET

Die Erfindung betrifft eine Anordnung mit einer Befestigungseinrichtung zur Befestigung eines Lichtleiters und mit einem Fahrzeuginterieurelement, und ein Verfahren zur Montage einer solchen Befestigungseinrichtung.

### HINTERGRUND DER ERFINDUNG

Es ist bekannt, die Beleuchtung von Fahrzeuginnenräumen unter anderem mit Lichtleitern vorzunehmen. Der Lichtleiter dient hierbei sowohl zur Erzeugung unmittelbar sichtbarer Lichtlinien, als auch zur Erzeugung einer indirekten Beleuchtung, die als Ambientebeleuchtung bezeichnet wird.

Als Lichtleiter kommen üblicherweise PMMA-Fasern zum Einsatz, die etwa einen Durchmesser von 0,2 bis 3,0 mm aufweisen. Um einen solchen im Interieur eines Fahrzeugs zu verbauen, wird dieser gemäß einem herkömmlichen Verfahren mit einem Textilband umschlossen. Das Textilband weist einen Überstand auf, der auch als Fahne oder Befestigungsfahne bezeichnet wird, der zwischen zwei Abschnitten einer Dekoroberfläche, etwa zwischen zwei Lederabschnitten vernäht wird.

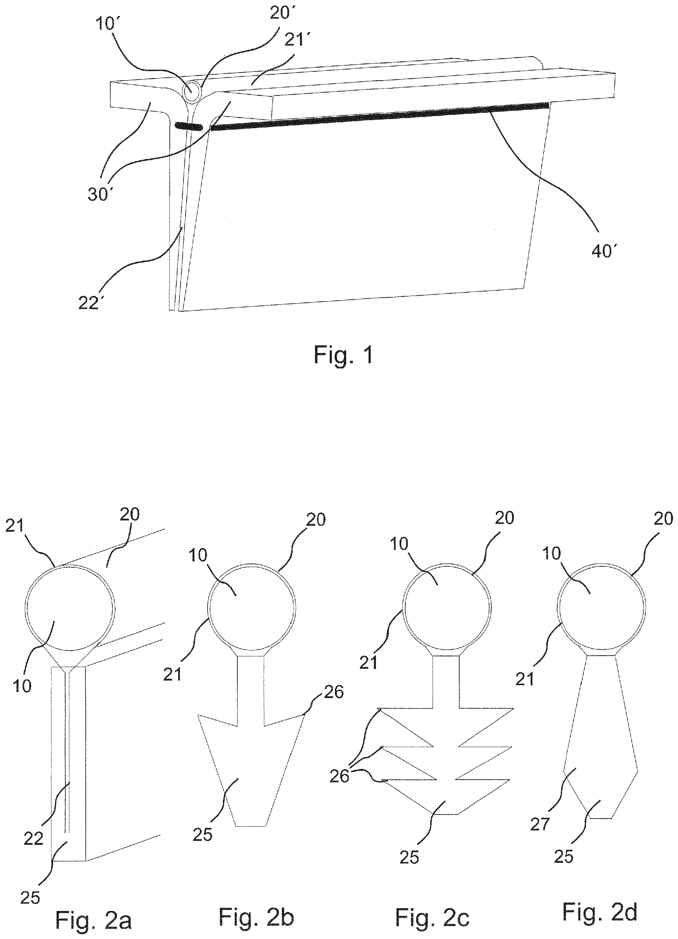

Die oben beschriebene Befestigungstechnik ist in Figur 1 gezeigt. Hier ist ein Lichtleiter 10' mit einem Textil 20' ummantelt, das einen Hohlteil 21' aufweist, in das der Lichtleiter 10' eingebracht ist. Der textile Überstand 22' ist mittels einer Naht 40' in einen Fügebereich zwischen zwei Lederschichten 30' eingenäht. Grundsätzlich hat die Textilummantelung 20' die Aufgabe, den Lichtleiter vor Berührung und mechanischer/chemischer Beschädigung zu schützen. Ferner kann die Textilummantelung optische Funktionen haben, etwa die Funktion einer Claddingschicht übernehmen, oder die Intensität und Farbe des abgestrahlten Lichts bestimmen.

Eine Fixierung des Lichtleiters durch Einnähen oder Klemmen geht aus der DE 197 24 486 A1 hervor. Darin wird der Lichtleiter wahlweise mit einer transparenten Folie, einem Gewebe, Fasergeflecht oder mit einem einteiligen Kunststoffelement umschlossen.

Eine weitere Fixierung eines Lichtleiters an einem Bauteil ist beispielsweise in der DE 20 2005 003 613 U1 offenbart. Hierbei wird eine Art Keder beschrieben, in der ein Lichtleiter angeordnet ist. Der Keder kann beispielsweise zur Verzierung in die Nähte von Sitzen, Kopfstützen oder Fußmatten eingebracht werden.

Die US 2002/0071285 A1 offenbart darüber hinaus eine Lichtleiteranordnung zur Beleuchtung von Oberflächen. Die Lichtleiteranordnung umfasst hierbei einen gestreckten Teil bestehend aus einem ersten Material, das teilweise transparent ist. Der gestreckte Teil besitzt einen oder mehrere Schenkel, um die Lichtleiteranordnung auf einem Träger zu befestigen.

Das Vernähen oder Klemmen des Lichtleiters in Fügebereiche einer Dekoroberfläche stellt einen aufwendigen und teuren zusätzlichen Arbeitsgang in Vorbereitung zum Kaschierprozess dar. Deshalb sind mit Lichtleitern versehene Interieurelemente von Fahrzeugen nur in der oberen Mittelklasse und Oberklasse und in relativ geringer Stückzahl zu finden.

### BESCHREIBUNG DER ERFINDUNG

Es ist eine Aufgabe der Erfindung, die Montage von Lichtleitern insbesondere in Fahrzeuginnenräumen zu vereinfachen.

Gelöst wird die Aufgabe mit einer Anordnung gemäß Anspruch 1 und einem Verfahren zur Montage eines Lichtleiters gemäß Anspruch 6.

Die Unteransprüche sowie die nachfolgende allgemeine Beschreibung und die Beschreibung bevorzugter Ausführungsformen enthalten vorteilhafte Ausgestaltungen der Erfindung.

Die Befestigungseinrichtung dient zur Befestigung eines Lichtleiters durch teilweises oder vollständiges Einstecken der Befestigungseinrichtung in eine Nut eines Fahrzeuginterieurs. Beim Einstecken der Befestigungseinrichtung in die Nut kann die Befestigungseinrichtung bereits einen Lichtleiter enthalten. Alternativ kann der Lichtleiter nach der Montage der Befestigungseinrichtung eingebracht werden. Die Befestigungseinrichtung weist einen vorzugsweise flexiblen Aufnahmeteil mit einem zur Aufnahme des Lichtleiters länglichen Hohlteil und einem, im Querschnitt gesehen, sich vom Hohlteil weg erstreckenden Überstand auf. Der Querschnitt ist hier senkrecht zur Längserstreckung des Hohlteils und damit der Lichtleiterachse zu nehmen. Der längliche Hohlteil umschließt den Lichtleiter und dient somit als Ummantelung des Lichtleiters. Der Aufnahmeteil weist einen länglichen Materialstreifen aus Textil auf, der sich um den Lichtleiter legt, diesen vorzugsweise direkt kontaktiert, wobei die beiden Enden des Materialstreifens zusammengeführt werden und sich zusammen als Überstand vom Hohlteil des Aufnahmeteils weg erstrecken. Der Überstand wird auch als Fahne bezeichnet.

Gemäß der vorliegenden Erfindung ist der Überstand mit einem stabilen Befestigungselement verbunden, wobei durch den Kunststoff und die Dicke der Fahne die nötige Stabilität erreicht wird. Die nötige Stabilität bemisst sich danach, ob die Befestigungseinrichtung über das stabile Befestigungselement in die dafür vorgesehene Nut eingebracht werden kann, ohne sich zu verbiegen oder auszuweichen. Wesentlich hierbei ist, dass die Nut bereits existiert und nicht erst durch ein etwaiges Vernähen oder Klemmen des Lichtleiters oder einer den Lichtleiter umgebenden Ummantelung hergestellt wird.

Durch die Verstärkung oder Versteifung des Überstands mit dem Befestigungselement kann der Lichtleiter samt Ummantelung in die bereits existierende Nut einfach, schnell und unkompliziert eingesteckt werden. Das Befestigungselement ist hierbei so steif und so stabil, dass dieses durch die Montagekraft komplett oder teilweise in die Nut eingebracht werden kann und sich nicht verbiegt oder ausweicht. Damit lässt sich der Lichtleiter auf einfache Art und Weise montieren, wodurch eine Verringerung der Herstellungskosten ermöglicht wird. Ferner können Gewicht und Kosten dahingehend eingespart werden, dass keine zusätzlichen Elemente, wie etwa Fäden zum Vernähen, Schrauben, zusätzliche Klemmelemente und dergleichen erforderlich sind.

Der Aufnahmeteil weist ein Textil auf, das den Hohlteil und den Überstand bildet, wobei der textile Überstand mit dem Befestigungselement verbunden ist. Textilstreifen eignen sich zur Ummantelung des Hohlleiters ganz besonders, da diese flexibel sind, sich einfach um den Lichtleiter legen lassen und sich bequem aus den Enden des Textilstreifens ein Überstand herstellen lässt.

Ferner weist das Befestigungselement einen Klettstreifen auf. Insbesondere dann, wenn der Klettstreifen mit einem in der Nut befindlichen oder eine Nutwand bildenden Textil zusammenwirkt, wird auf einfache und gewichtsreduzierte Weise eine dauerhafte Befestigung erzielt. Weist der Klettstreifen allein oder zusammen mit dem Überstand eine ausreichende Festigkeit zum Einstecken der Befestigungseinrichtung in die Nut auf, kann auf zusätzliche Maßnahmen zur Versteifung des Überstands verzichtet werden. Die Nut kann beispielsweise dadurch zustande kommen, dass zwei verschiedene Materialien zusammenlaufen, wobei an der entstehenden Fuge der Lichtleiter mit der verstärkten Fahne eingesteckt wird. Wenn eines dieser Materialien ein Textil ist, eignet sich die hier dargelegte Ausführungsform mit dem Klettstreifen ganz besonders zur dauerhaften Befestigung.

Vorzugsweise weist das Befestigungselement einen Kunststoffstreifen auf, wodurch die notwendige Stabilität auf einfache Art und Weise und mit wenig Gewicht realisiert werden kann. Außerdem lassen sich bei Kunststoff auf besonders einfache Weise ein oder mehrere geometrische Strukturen am Befestigungselement anformen, die zur Verkrallung mit der Nut dienen können. Die geometrischen Strukturen können Widerhaken, Vorsprünge, Verbreiterungen, Vertiefungen und dergleichen sein, die mit den die Nut ausbildenden Wänden in Kontakt geraten und so zusammenwirken, dass eine sichere und dauerhafte Halterung des Lichtleiters erzielt wird.

Vorzugsweise besteht der Aufnahmeteil teilweise oder vollständig aus Kunststoff, der vorzugsweise extrudiert ist. Dieser Kunststoff kann transparent oder teilweise transparent sein, was insbesondere dann wichtig ist, wenn der längliche Hohlteil aus dem Kunststoff ausgebildet ist. Indem der Hohlteil und der Überstand aus ein und demselben Kunststoff ausgebildet sind, können der Aufnahmeteil und das Befestigungselement einstückig vorgesehen sein, was eine besonders leichte und kostengünstige Realisierung der vorliegenden Erfindung darstellt.

Das Befestigungselement weist vorzugsweise eine Dicke (Abmessung entlang des Nutquerschnitts) im Bereich von 0,5 bis 2 mm, noch bevorzugter etwa 1 mm auf. Ferner weist das Befestigungselement vorzugsweise eine Breite (Abmessung entlang der Nuttiefe) im Bereich von 5 bis 20 mm, noch bevorzugter etwa 10 mm auf. Die obigen Abmessungen haben sich im Hinblick auf die Montage der Befestigungseinrichtung als besonders geeignet herausgestellt und lassen ein einfaches und schnelles Eindrücken der Befestigungseinrichtung bei ausgezeichneter Haltekraft zu.

In einer Ausgestaltung ist in das Hohlteil der Befestigungseinrichtung ein Lichtleiter eingebracht.

Wie es bereits angedeutet wurde, kann der Lichtleiter vor der Montage der Befestigungseinrichtung oder danach in den Hohlraum eingebracht werden. Es ist im Hinblick auf die Montage der Befestigungseinrichtung vorteilhaft, wenn vor dem Einbringen des Befestigungselements in die Nut eine Montagevorrichtung in die Nut eingebracht wird, die nach dem Einbringen des Befestigungselements wieder entfernt wird.

Dies ist insbesondere dann von Vorteil, wenn das Befestigungselement besondere Mittel zur Zusammenwirkung mit einer oder mehreren Nutwänden aufweist, wie etwa geometrische Strukturen zum Verkrallen, oder Klettflächen. Um den Sitz des Lichtleiters weiter zu verstärken, ist, wie es oben dargelegt wurde, der Überstand oder das Befestigungselement mit einem Klettstreifen versehen und mit der besagten

Montagevorrichtung in die Nut gedrückt werden. Das Befestigungselement mit dem Klettstreifen ist hierbei so steif, dass dieses durch die Montagekraft komplett in die Nut rutscht und sich nicht etwa verbiegt oder ausweicht. Der Klettstreifen verhakt sich mit dem Material der Nut. Vorzugsweise ist die Montagevorrichtung ein Steg, der bei der Montage in die Nut geschoben und nach Einbringung der Befestigungseinrichtung aus dieser herausgezogen wird. Der Steg weist vorzugsweise eine Breite (Abmessung entlang der Nuttiefe) im Bereich von 10 bis 50 mm und vorzugsweise eine Dicke (Abmessung entlang des Nutquerschnitts) im Bereich von 0,5 bis 2 mm auf. Noch bevorzugter beträgt die Breite ungefähr 20 mm und die Dicke ungefähr 1 mm. Die Montagevorrichtung wird vor der Montage in die Nut gesteckt und verhindert bei der Montage ein Berühren der klebenden Seite bzw. des Klettstreifens mit der entsprechenden Nutwand. Damit rutscht das stabile Befestigungselement ohne großen Kraftaufwand in die Nut. Nach der Montage des Lichtleiters wird die Montagevorrichtung wieder herausgezogen. Die Länge der Montagevorrichtung richtet sich nach der Länge der Nut. Es muss nicht besonders betont werden, dass eine oder beide Seiten des Befestigungselements mit einem Klettstreifen vorgesehen sein können.

Die Montagevorrichtung kann neben der beschriebenen Montageerleichterung die Aufgabe haben, dass damit die Eindrücktiefe bestimmt werden kann, sodass eine definierte Lage des Lichtleiters gewährleistet ist. Vorzugsweise wird die Eindrücktiefe durch einen Schlitten festgelegt, der auf dem Montagesteg gleitet und dabei die Befestigungseinrichtung um ein definiertes Maß nach unten drückt.

Die vorliegende Erfindung dient der Befestigung eines Lichtleiters an Interieurelementen in Fahrzeuginnenräumen. Insbesondere Fügebereiche zwischen Interieurteilen oder Dekoroberflächen eignen sich als Nut zum Einbringen der Befestigungseinrichtung. Besonders bevorzugt kommt die hier beschriebene Befestigungseinrichtung an Türinnenverkleidungen zum Einsatz. Doch auch die Mittelkonsole, die Instrumententafel, Sitzbezüge und andere Elemente des Fahrzeuginterieurs sind zur Realisierung der Erfindung geeignet.

Die vorliegende Erfindung ist ganz besonders geeignet für Fahrzeuginnenräume, da es hier in ausgesprochen hohem Maße auf eine ansprechende Erscheinung über eine lange Lebensdauer bei hoher Herstellungsproduktivität ankommt. Darüber hinaus sind weitere Vorteile und Merkmale der vorliegenden Erfindung aus der folgenden Beschreibung bevorzugter Ausführungsformen ersichtlich. Die dort beschriebenen Merkmale können alleinstehend oder in Kombination mit einem oder mehreren der oben erwähnten Merkmale umgesetzt werden, insofern sich die Merkmale nicht widersprechen. Die folgende Beschreibung der bevorzugten Ausführungsformen erfolgt dabei unter Bezugnahme auf die begleitenden Zeichnungen.

### KURZE BESCHREIBUNG DER FIGUREN

Figur 1 zeigt einen über eine Befestigungsfahne vernähten Lichtleiter aus dem Stand der Technik.
Figuren 2a bis 2d zeigen als Vergleichsbeispiele verschiedene Befestigungseinrichtungen mit Befestigungselementen unterschiedlicher Geometrie.
Figur 3a zeigt eine Befestigungseinrichtung mit Klettstreifen, die über eine Montagevorrichtung in eine Nut eingebracht wird; Figur 3b zeigt die montierte Befestigungseinrichtung der Figur 3a nach entfernter Montagevorrichtung.

### WEGE ZUR AUSFÜHRUNG DER ERFINDUNG

Figur 2a zeigt einen Lichtleiter 10, der mit einem als Aufnahmeteil dienenden Textilstreifen 20 ummantelt ist. Das Textil 20 weist einen Hohlteil 21 auf, in den der Lichtleiter 10 eingeschoben ist. Auf der Unterseite des Lichtleiters 10 werden die beiden Enden des Textilstreifens 20 zusammengeführt und bilden gemeinsam einen Überstand 22, der auch als Fahne bezeichnet wird. Der Überstand 22 ist in ein stabiles Befestigungselement 25 aus Kunststoff eingebettet.

Das Befestigungselement 25 versteift und/oder verstärkt den Überstand 22, wodurch sich die Befestigungseinrichtung, bestehend aus Aufnahmeteil 20 und Befestigungselement 25, auf einfache Weise in eine bereits bestehende Nut eindrücken lässt.

Alternativ kann der Textilstreifen 20 durch einen Kunststoffmantel ersetzt werden, der beispielsweise durch einen Extrusionsprozess hergestellt wird. Der Aufnahmeteil 20 aus Kunststoff kann einteilig sein, wobei hier durch die Dicke der Fahne 22 die nötige Stabilität erreicht wird. Ferner ist es beim Extrusionsprozess auf besonders einfache Art und Weise möglich, verschiedene geometrische Strukturen zur Verkrallung herzustellen, wie es in den Figuren 2b bis 2d gezeigt ist. In den Figuren 2b bis 2d sind der Hohlteil 21 und das Befestigungselement 25 einstückig aus einem Kunststoff hergestellt. Allerdings versteht es sich, dass analog zur Figur 2a geometrische Strukturen zur Verkrallung auch bei eingebettetem Überstand 22 an dem Befestigungselement 25 oder bei einem anders ausgebildeten Befestigungselement 25 vorgenommen werden können.

Wie in der Figur 2a sind in den Figuren 2b bis 2d jeweils ein Lichtleiter 10 vorgesehen, der von einem Aufnahmeteil 20, hier vollständig aus Kunststoff, ummantelt ist. Der Aufnahmeteil 20 weist einen Hohlteil 21 und ein stabiles Befestigungselement 25 auf. Die Befestigungselemente 25 in den Figuren 2b und 2d weisen unterschiedliche Geometrien auf. In den Figuren 2b und 2c sind widerhakenförmige Ecken 26 vorgesehen, die sich verkrallen und so mit den Nutwänden zusammenwirken, dass eine sichere Befestigung des Lichtleiters 10 gewährleistet ist. Die Ecken 26 können scharfkantig oder abgerundet sein. Das Befestigungselement 25 der Figur 2d weist eine bauchige Geometrie auf, die im unteren Bereich eine Aufweitung 27 hat.

Die Gestaltung der Geometrie des Befestigungselements kann durchaus von der Form, insbesondere dem Querschnitt, den Materialien und gegebenenfalls anderen Eigenschaften der Nut abhängen. Wichtig hierbei ist, dass das Befestigungselement mit oder ohne besondere geometrische Strukturen eine solche Festigkeit aufweist, dass die Befestigungseinrichtung zuverlässig in die Nut einsteckbar ist.

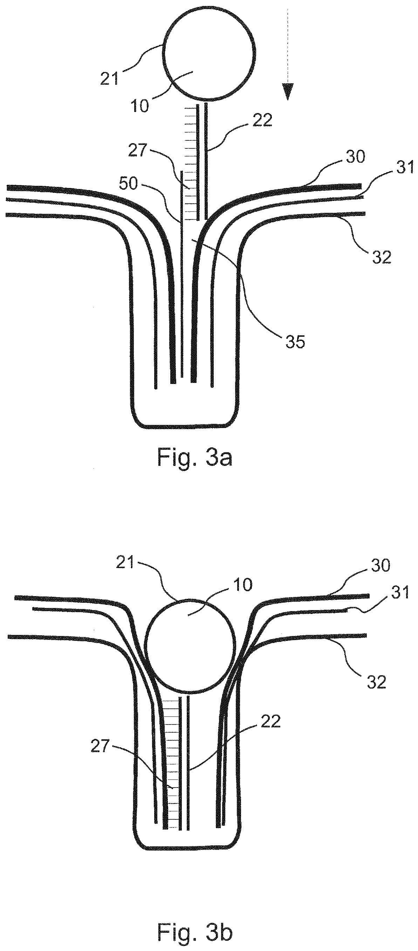

Es sei bemerkt, dass mit der Befestigungseinrichtung der vorliegenden Erfindung auf elegante Art und Weise zwischen Grundausstattung und Sonderausstattung für Fahrzeuginnenräume unterschieden werden kann. Im einfachsten Fall unterscheidet sich die Befestigungseinrichtung in der Grundausstattung (ohne Lichtleiter) von der Sonderausstattung (mit Lichtleiter) nur um die beiden Bohrungen zur Durchführung der beiden Lichtleiterenden. Dies ist zum Beispiel der Fall bei einer Türinnenverkleidung mit Nutkaschierung. In einer Nut des Grundträgers laufen zwei Materialien, die unterschiedlich oder gleich sein können, zusammen (vgl. Figuren 3a und 3b), wobei an der entstehenden Fuge der Lichtleiter mit der verstärkten Befestigungsfahne eingesteckt werden kann. Das bedeutet, dass zum Einstecken der Befestigungseinrichtung in der Grundausstattung und der Sonderausstattung die gleichen Werkzeuge und Verfahren angewendet werden können, was sich auf synergetische Weise kostengünstig auf die Herstellung auswirkt.

Die Nutbreite ist so großzügig bemessen, dass eine Befestigungseinrichtung mit verstärkter Fahne, d.h. mit einem stabilen Befestigungselement, sehr einfach montiert werden kann. Es hat sich hierbei herausgestellt, dass ein Befestigungselement mit einer Dicke im Bereich zwischen 0,5 bis 2 mm, bevorzugt etwa 1 mm, und einer Breite im Bereich von 5 bis 20 mm, bevorzugt etwa 10 mm, ausgezeichnet montiert werden kann und eine ausgezeichnete Haltbarkeit aufweist. In einem erfolgreichen Versuchsaufbau wurde hierzu die Fahne einer Textilummantelung mit einem ABS-Kunststoffstreifen verklebt und dadurch verstärkt. Nach der Montage der Befestigungseinrichtung wurde der Lichtleiter von der Vorderseite zur Rückseite durch den Hohlteil gesteckt und auf der Rückseite mit Lichtquellen kontaktiert.

Die Figur 3a zeigt einen Lichtleiter 10 mit verstärkter Fahne bzw. verstärktem Überstand 22. Die Fahne 22 ist mit einem Klettstreifen 27 verstärkt. Der Klettstreifen 27 ist so steif, dass die verstärkte Fahne 22 durch die Montagekraft komplett in die Nut 35 rutscht und sich nicht verbiegt oder ausweicht. Die Nut 35 befindet sich zwischen zwei zusammenlaufenden Dekoroberflächen 30, die beispielsweise aus Leder, einem lederähnlichen Material und/oder Textil vorgesehen sein können. Unter der Dekoroberfläche 30 liegt eine Weichkomponente 31 und unter dieser ein Grundträger 32, der die Nutform vorgibt. Der Lichtleiter 10 mit Befestigungseinrichtung, die hier aus dem Klettstreifen 27 und der Fahne 22 besteht, wird unter Zuhilfenahme einer Montagevorrichtung 50, die ein etwa 20 mm breiter und 1 mm dicker Steg ist, in die Nut 35 eingedrückt. Die Montagevorrichtung 50 verhindert bei der Montage ein Berühren des Klettstreifens mit dem Material der Dekorschicht 30. Darüber hinaus rutscht die Fahne 22 ohne großen Kraftaufwand in die Nut 35. Nach der Montage wird die Montagevorrichtung 50 wieder herausgezogen. Die Länge der als Steg ausgebildeten Montagevorrichtung 50 richtet sich nach der Länge der Nut 35, wobei hier nicht zwangsläufig eine eins-zu-ein Korrespondenz vorliegen muss.

Neben der oben beschriebenen Montageerleichterung kann die Montagevorrichtung 50 das Maß für die Eindrücktiefe bestimmen, sodass eine definierte Lage des Lichtleiters 10 gewährleistet ist. Man könnte die Eindrücktiefe durch einen Schlitten (nicht dargestellt) festlegen, der auf der Montagevorrichtung gleitet und dabei den Lichtleiter 10 um ein definiertes Maß nach unten drückt.

## Patentansprüche

1. Anordnung, aufweisend eine Befestigungseinrichtung zur Befestigung eines Lichtleiters (10) durch Einstecken der Befestigungseinrichtung in eine Nut (35) eines Fahrzeuginterieurs sowie ein Fahrzeuginterieur mit der Nut (35), wobei die Befestigungseinrichtung einen Aufnahmeteil (20) mit einem zur Aufnahme des Lichtleiters (10) länglichen Hohlteil (21) und einen im Querschnitt gesehen sich vom Hohlteil (21) weg erstreckenden Überstand (22) aufweist, wobei der Aufnahmeteil (20) ein Textil aufweist, das den Hohlteil (21) und den Überstand (22) bildet, **dadurch gekennzeichnet, dass**
der Überstand (22) mit einem stabilen, bei einem Einbringen in die Nut (35) sich nicht verbiegenden oder ausweichenden Befestigungselement (25) verbunden ist, das einen Klettstreifen (27) aufweist, teilweise oder vollständig in die Nut (35) einbringbar ist und die Befestigungseinrichtung in der Nut hält.

2. Anordnung nach Anspruch 1, **dadurch gekennzeichnet, dass** der Aufnahmeteil (20) teilweise oder vollständig aus Kunststoff vorgesehen, vorzugsweise extrudiert ist.

3. Anordnung nach einem der vorhergehenden Ansprüche, **dadurch gekennzeichnet, dass** das Befestigungselement (25) eine Dicke im Bereich von 0,5 bis 2 mm, vorzugsweise etwa 1 mm aufweist.

4. Anordnung nach einem der vorhergehenden Ansprüche, **dadurch gekennzeichnet, dass** das Befestigungselement (25) eine Breite im Bereich von 5 bis 20 mm, vorzugsweise etwa 10 mm aufweist.

5. Anordnung nach einem der vorhergehenden Ansprüche, **dadurch gekennzeichnet, dass** ein Lichtleiter (10) in den Hohlteil (21) eingebracht ist.

6. Verfahren zur Montage eines Lichtleiters (10), wobei das Verfahren die Schritte aufweist:
- Bereitstellen einer Befestigungseinrichtung zur Befestigung eines Lichtleiters (10) durch Einstecken der Befestigungseinrichtung in eine Nut (35) eines Fahrzeuginterieurs, wobei
die Befestigungseinrichtung einen Aufnahmeteil (20) mit einem zur Aufnahme des Lichtleiters (10) länglichen Hohlteil (21) und einen im Querschnitt gesehen sich vom Hohlteil (21) weg erstreckenden Überstand (22) aufweist, und wobei
der Überstand (22) mit einem stabilen Befestigungselement (25) verbunden ist, das einen Klettstreifen (27) aufweist, der teilweise oder vollständig in die Nut (35) einbringbar ist und die Befestigungseinrichtung in der Nut hält,
- Einbringen des Befestigungselements (25) in die Nut (35) eines Fahrzeuginterieurs, und
- Einbringen des Lichtleiters (10) in die Befestigungseinrichtung, vor oder nach dem Einbringen des Befestigungselements (25) in die Nut (35), **dadurch gekennzeichnet, dass** vor dem Einbringen des Befestigungselements (25) in die Nut (35) eine Montagevorrichtung (50) in die Nut (35) eingebracht wird, die nach dem Einbringen des Befestigungselements (25) wieder entfernt wird, und das Befestigungselement (25) eine Klettseite aufweist, wobei die Montagevorrichtung (50) beim Einbringen des Befestigungselements (25) in die Nut (35) ein Berühren der Klettseite mit einer die Nut (35) bildenden Seite verhindert.

7. Verfahren nach Anspruch 6, **dadurch gekennzeichnet, dass** die Montagevorrichtung (50) ein Steg ist, der vorzugsweise eine Breite im Bereich von 10 bis 50 mm und vorzugsweise eine Dicke im Bereich von 0,5 bis 2 mm aufweist, noch bevorzugter eine Breite von etwa 20 mm und eine Dicke von etwa 1 mm.

## Claims

1. Arrangement, comprising a fastening device for fastening an optical fibre (10) by inserting the fastening device into a groove (35) of a vehicle interior, and a vehicle interior with the groove (35), wherein the fastening device has a receiving part (20) with an elongated hollow part (21), for receiving the optical fibre (10), and a projection (22), extending away from the hollow part (21) when seen in cross section, wherein the receiving part (20) comprises a textile that forms the hollow part (21) and the projection (22), **characterized in that** the projection (22) is connected to a stable fastening element (25), which does not bend or deviate when it is introduced into the groove (35), has a burr strip (27), can be partially or completely introduced into the groove (35) and retains the fastening device in the groove.

2. Arrangement according to Claim 1, **characterized in that** the receiving part (20) is partially or completely provided, preferably extruded, from plastic.

3. Arrangement according to one of the preceding claims, **characterized in that** the fastening element (25) has a thickness in the range of 0.5 to 2 mm, preferably approximately 1 mm.

4. Arrangement according to one of the preceding claims, **characterized in that** the fastening element (25) has a width in the range of 5 to 20 mm, preferably approximately 10 mm.

5. Arrangement according to one of the preceding claims, **characterized in that** an optical fibre (10) is incorporated in the hollow part (21).

6. Method for mounting an optical fibre (10), wherein the method comprises the steps of:
- providing a fastening device for fastening an optical fibre (10) by inserting the fastening device into a groove (35) of a vehicle interior, wherein the fastening device has a receiving part (20) with an elongated hollow part (21), for receiving the optical fibre (10), and a projection (22), extending away from the hollow part (21) when seen in cross section,
and wherein
the projection (22) is connected to a stable fastening element (25), which has a burr strip (27), which can be partially or completely introduced into the groove (35) and retains the fastening device in the groove,
- introducing the fastening element (25) into the groove (35) of a vehicle interior, and
- introducing the optical fibre (10) into the fastening device, before or after the introduction of the fastening element (25) into the groove (35), **characterized in that**
before the introduction of the fastening element (25) into the groove (35), a mounting device (50) is introduced into the groove (35), being removed again after the introduction of the fastening element (25), and the fastening element (25) has a burr side, wherein the mounting device (50) prevents the burr side from coming into contact with a side forming the groove (35) during the introduction of the fastening element (25) into the groove (35).

7. Method according to Claim 6, **characterized in that** the mounting device (50) is a web, which preferably has a width in the range of 10 to 50 mm and preferably has a thickness in the range of 0.5 to 2 mm, still more preferably a width of approximately 20 mm and a thickness of approximately 1 mm.

## Revendications

1. Agencement, comprenant un appareil de fixation pour la fixation d'un conducteur de lumière (10) par insertion de l'appareil de fixation dans une rainure (35) d'un intérieur de véhicule, ainsi qu'un intérieur de véhicule muni de la rainure (35), l'appareil de fixation comprenant une partie de réception (20) munie d'une partie creuse oblongue (21) pour la réception du conducteur de lumière (10) et une saillie (22) s'étendant, tel que vu dans la section transversale, à distance de la partie creuse (21), la partie de réception (20) comprenant un textile, qui forme la partie creuse (21) et la saillie (22), **caractérisé en ce que**
la saillie (22) est reliée avec un élément de fixation stable (25), qui ne se déforme ou ne s'affaisse pas lors d'une introduction dans la rainure (35), qui comprend une bande agrippante (27), peut être introduit en partie ou en totalité dans la rainure (35) et qui maintient l'appareil de fixation dans la rainure.

2. Agencement selon la revendication 1, **caractérisé en ce que** la partie de réception (20) est prévue en partie ou en totalité en matière plastique, de préférence extrudée.

3. Agencement selon l'une quelconque des revendications précédentes, **caractérisé en ce que** l'élément de fixation (25) présente une épaisseur dans la plage allant de 0,5 à 2 mm, de préférence d'environ 1 mm.

4. Agencement selon l'une quelconque des revendications précédentes, **caractérisé en ce que** l'élément de fixation (25) présente une largeur dans la plage allant de 5 à 20 mm, de préférence d'environ 10 mm.

5. Agencement selon l'une quelconque des revendications précédentes, **caractérisé en ce qu'**un conducteur de lumière (10) est introduit dans la partie creuse (21).

6. Procédé de montage d'un conducteur de lumière (10), le procédé comprenant les étapes suivantes :
- la fourniture d'un appareil de fixation pour la fixation d'un conducteur de lumière (10) par insertion de l'appareil de fixation dans une rainure (35) d'un intérieur de véhicule,
l'appareil de fixation comprenant une partie de réception (20) munie d'une partie creuse oblongue (21) pour la réception du conducteur de lumière (10) et une saillie (22) s'étendant, tel que vu dans la section transversale, à distance de la partie creuse (21), et
la saillie (22) étant reliée avec un élément de fixation stable (25), qui comprend une bande agrippante (27), qui peut être introduit en partie ou en totalité dans la rainure (35) et qui maintient l'appareil de fixation dans la rainure,
- l'introduction de l'élément de fixation (25) dans la rainure (35) d'un intérieur de véhicule, et
- l'introduction du conducteur de lumière (10) dans l'appareil de fixation, avant ou après l'introduction de l'élément de fixation (25) dans la rainure (35), **caractérisé en ce que**
avant l'introduction de l'élément de fixation (25) dans la rainure (35), un dispositif de montage (50) est introduit dans la rainure (35), qui est retiré après l'introduction de l'élément de fixation (25), et l'élément de fixation (25) comprend un côté agrippant, le dispositif de montage (50) empêchant lors de l'introduction de l'élément de fixation (25) dans la rainure (35) un contact du côté agrippant avec un côté formant la rainure (35).

7. Procédé selon la revendication 6, **caractérisé en ce que** le dispositif de montage (50) est une entretoise, qui présente de préférence une largeur dans la plage allant de 10 à 50 mm et de préférence une épaisseur dans la plage allant de 0,5 à 2 mm, de manière encore davantage préférée une largeur d'environ 20 mm et une épaisseur d'environ 1 mm.
